Europäisches Patentamt

**European Patent Office**

**Office européen des brevets**

(19)

(11) Publication number: **0 024 058**

**B1**

(12) **EUROPEAN PATENT SPECIFICATION**

(45) Date of publication of patent specification: **16.02.83**

(51) Int. Cl.³: **B 32 B 11/06, E 02 D 5/22, E 02 D 31/00**

(21) Application number: **80200434.1**

(22) Date of filing: **08.05.80**

(54) Laminated sheet containing a bituminous slip layer, and process for making a roll thereof.

(30) Priority: **22.05.79 JP 62227/79**

(43) Date of publication of application:
**18.02.81 Bulletin 81/7**

(45) Publication of the grant of the patent:
**16.02.83 Bulletin 83/7**

(84) Designated Contracting States:
**BE DE FR GB IT NL**

(56) References cited:
**DE - A - 2 286 920**
**FR - A - 806 724**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Sakai, Toshio**
**4-13-7, Fuseshinmachi**
**Kashiwa City Chiba Prefecture (JP)**
Inventor: **Urabe, Isaburo**
**37-63 Chiba City**
**Chiba Prefecture (JP)**

(74) Representative: **Puister, Antonius Tonnis, Mr. et al,**
**P.O. Box 302**
**NL-2501 CH The Hague (NL)**

Courier Press, Leamington Spa, England

# A laminated sheet containing a bituminous slip layer

The present invention relates to a laminated sheet containing a bituminous slip layer, which sheet is of the laminated type and can be used to form a slip layer in situ on the outer surface of a pile or other underground structural member to be set in the ground, whereby the negative friction on the pile or other structural member is decreased.

When a pile (or other underground structural member) is driven into the ground which is still in the settling process, it is desirable to decrease the negative friction on the outer surface of the pile, since this negative friction acts as a down drag force.

A known method for decreasing this negative friction is coating the vertical outer wall of a pile or other underground structural member with a bituminous material to form a bituminous slip layer. For example, as far as the driven piles are concerned, before driving the piles are coated with molten bitumen in a factory while the piles are horizontally placed.

Since underground temperatures are often at most 30°C, it is desirable to employ a bituminous material having a softening point of 65 to 75°C and a penetration of 40 to 60 dmm (25°C; ASTM No, D5). The thickness of a bituminous slip layer should be at least 3 mm and no reinforcement is used.

However, when a melt of the above-mentioned low temperature-melting bituminous material is coated on a vertical wall of a structural member, a sagging or dropping of the coated bituminous material will often occur, so that it will be very difficult to form a uniform bituminous layer having a predetermined thickness. Moreover, after the bituminous slip layer has been formed on the structural member, a sagging of the coating might occur in the sunlight.

To avoid such troubles, a bituminous material can be formed into a laminated sheet having a desired thickness. A known laminated slip layer sheet comprises a bituminous slip layer and a heat-resistant paper on it, only the outside of this paper being coated with a releasing agent for unwinding purposes, the non-release surface of the paper being tightly bonded to the bituminous slip layer and the other side of the bituminous slip layer being uncoated. In such a known sheet, a sagging of the bituminous material is often observed during the storage of the sheet. Furthermore, before the sheet is applied to the outer surface of a structural member, an adhesive must be coated not only on the outer surface of the structural member but also on the sheet in order to form a strong bond between the structural member and the sheet.

According to the present invention a novel slip layer sheet is provided which can be easily and economically manufactured and applied on site and which contains an adhesive layer, so that on site a strong bond with the structural member is easily obtained. Such a sheet can be manufactured by coating a heat-resistant layer with a bituminous slip layer (or applying the heat-resistant layer to the bituminous slip layer) and coating the uncoated side of the slip layer with an adhesive layer and then with a release layer.

According to the present invention the adhesive is economically provided as an aqueous emulsion of a suitable adhesive. After evaporation of the water the sheet is wound on a cylinder while a release layer, preferably paper, is stuck on the adhesive layer. However, it takes several minutes for the water to evaporate, which reduces the production efficiency.

According to the invention this problem can be solved by using a water-absorbing release layer, preferably a water-absorbing release paper. This layer can be applied before the water has evaporated. Moreover, by preparing the rolled sheet in this way the formation of wrinkles, which often is a problem, is avoided.

Thus, this invention relates to a laminated sheet containing a bituminous slip layer to reduce the negative friction force acting on the outer surface of a pile or other underground structure, characterized in that one surface of said slip layer is provided with a heat-resistant layer and the other surface is provided with a water-absorbing release layer, an adhesive layer being present between the slip layer and the water-absorbing release layer, which adhesive layer is formed by applying an aqueous emulsion of an adhesive to the said other surface of the bituminous slip layer or to the release layer.

This invention further relates to a roll of this sheet and to a process for manufacturing this roll, wherein a bituminous slip layer is formed on a heat-resistant layer, or a heat-resistant layer is applied to one side of a bituminous slip layer, a water-absorbing release layer or the other, free side of the bituminous slip layer is coated with an aqueous emulsion of an adhesive and the bituminous slip layer is wound on a cylinder while the release layer is stuck on said other side of the bituminous slip layer.

The water-absorbing release layer can be prepared by coating a strong paper with an aqueous solution of polyvinyl alcohol and, after drying, applying a releasing agent, such as a silicone, on the coating. This release paper absorbs the moisture in the emulsion of the adhesive. Its water absorption capacity is, e.g., about 80 g/m², which is sufficient to form the adhesive layer without evaporation of the water of the emulsion of the adhesive.

The emulsion of the adhesive is suitably an aqueous emulsion of an acrylic acid ester copolymer.

The present laminated slip layer sheets can also be manufactured by forming a bituminous slip layer on a heat-resistant layer, coating the water-absorbing release layer with the adhesive emulsion, if necessary drying with e.g. hot air, and attaching the release layer with the adhesive layer to the slip layer under pressure to transfer the adhesive layer to the slip layer.

The heat-resistant layer is preferably a heat-resistant paper, e.g. a strong kraft paper, but e.g. polypropylene film, polyester film, metal foil, such as aluminium foil, or a paper laminated with polypropylene, polyester or metal foil, and having improved water proofness, can also be used.

The heat-resistant layer makes it possible to wind the bituminous slip layer on a reel and furthermore prevents the intrusion of soil and sand into the slip layer formed on the structural member. Advantageously the outside of the heat-resistant layer is coated with a releasing agent for unrolling purposes. It is also possible to employ a water-absorbing release layer, the both surfaces of which have been coated with a releasing agent.

Furthermore, according to the invention, it is possible to apply two or more pieces of the slip layer sheet onto the outer surface of a structural member, whereby a relatively thick slip layer, having a predetermined thickness, can be formed on the structural member.

The thickness of the bituminous layer is rather large, e.g. 3—15 mm. So, if both surfaces of the bituminous layer are covered with a paper which has a great resistance to dimensional change, and if the resulting laminated sheet is thereafter wound on a reel, then there will be a virtual difference in the circumferential length between the outer portion and the inner portion of the wound sheet, so that several wrinkles might be formed on the inner portion of the sheet. The formation of such wrinkles are avoided if the inner layer (i.e. the water-absorbing release paper) is applied to the bituminous layer while the resulting laminated sheet is being wound on a reel. The use of the water-absorbing layer makes the winding process highly efficient as explained hereinabove.

The laminated sheet thus wound on a reel is very suitable for transportation and storage. In a roll of the laminated sheet, one surface of the bituminous layer is tightly adhered to the heat-resistant paper, and another surface of the bituminous layer is adhered via the adhesive layer to the release layer, so that no air is entrained on either of the surfaces of the bituminous layer and therefore there will be uneven areas on the surfaces of the bituminous layer.

In practice it is preferred to coat an adhesive emulsion, e.g. an acrylic acid ester copolyer emulsion, on a vertical wall of the structural member before the laminated sheet is applied to the vertical wall. For this purpose it is also possible to use an adhesive, e.g. an acrylic adhesive in a solvent, or e.g. a rubber/bitumen type adhesive. After the vertical wall has been coated with the adhesive emulsion, the water-absorbing release layer is removed from the laminated sheet, and said sheet is applied to the vertical wall of the structural member under pressure in such a manner that the adhesive layer of the sheet is brought into contact with the vertical wall, whereby the sheet is tightly bonded to the vertical wall.

By employing a laminated sheet according to the invention, it is possible to form perfectly and economically a slip layer having a uniform thickness on a vertical wall of a structural member (which is to be set under the ground). The bonding strength of the slip layer to the vertical wall surface is very good.

If the laminated sheet according to the invention contains as heat-resistant layer a strong heat-resistant paper having a waterproof plastic resin film adhered thereto, and if a laminated sheet of this type is applied to a structural member to be set under the ground, it will be observed that the heat-resistant paper, which is present on the surface of the laminated sheet, will contact the soil and will effectively prevent the intrusion of soil particles into the inner portion of the laminated sheet.

The technical advantages cannot be obtained if use is made of known slip layers, which have been formed by applying a molten bituminous material alone on the outer surface of a structural member.

The laminated sheet according to the invention has a sandwich structure, wherein a slip layer lies between a heat-resistant layer and a release layer. So, any undesirable dimensional change of the laminated sheet does not occur during the storage thereof.

The heat-resistant paper preferably has a light colour and therefore does not absorb a large amount of sun-rays. So, even if applying a laminated sheet according to the invention to a structural member is carried out at a place exposed to the sunshine, any substantial sagging of the bituminous material component of the sheet does not occur.

**Claims**

1. A laminated sheet containing a bituminous slip layer to reduce the negative friction force acting on the outer surface of a pile or other underground structure, characterized in that one surface of said slip layer is provided with a heat-resistant layer and the other surface is provided with a water-absorbing release layer, an adhesive layer being present between the slip layer and the water-absorbing release layer, which adhesive layer is formed by applying an aqueous emulsion of an adhesive to the said

other surface of the bituminous slip layer or to the release layer.

2. A sheet according to claim 1, wherein the heat-resistant layer is a heat-resistant paper.

3. A sheet according to claim 1 or 2, wherein the outside of the heat-resistant layer is coated with a releasing agent.

4. A sheet according to any one of claims 1—3, wherein the water-absorbing release layer is prepared by coating paper with an aqueous solution of polyvinyl alcohol.

5. A sheet according to any one of claims 1—4, wherein the adhesive is an acrylic acid ester copolyer.

6. A roll of a sheet according to any one of claims 1—5.

7. A process for manufacturing a roll according to claim 6, wherein a bituminous slip layer is formed on a heat-resistant layer, or a heat-resistant layer is applied to one side of a bituminous slip layer, a water-absorbing release layer or the other free side of the bituminous slip layer is coated with an aqueous emulsion of an adhesive and the bituminous slip layer is wound on a cylinder while the release layer is stuck on said other side of the bituminous layer.

## Revendications

1. Une feuille stratifiée contenant une couche bitumineuse de glissement afin de réduire la force négative de frottement agissant sur la surface extérieure d'un pieu ou d'une autre structure souterraine, caractérisée en ce qu'une surface de la couche de glissement est pourvue d'une couche résistant à la chaleur et l'autre surface est pourvue d'une couche anti-adhésive absorbant l'eau, une couche adhésive étant présente entre la couche de glissement et la couche anti-adhésive absorbant l'eau, la couche adhésive étant formée en appliquant une émulsion aqueuse d'une adhésif sur ladite autre surface de la couche bitumineuse de glissement ou sur la couche anti-adhésive.

2. Une feuille selon la revendication 1, dans laquelle la couche résistant à la chaleur est un papier résistant à la chaleur.

3. Une feuille selon la revendication 1 ou 2, dans laquelle l'extérieur de la couche résistant à la chaleur est revêtu d'un agent anti-adhésif.

4. Une feuille selon l'une quelconque des revendications 1 à 3, dans laquelle la couche anti-adhésive absorbant l'eau est préparée en revêtant du papier d'une solution aqueuse d'alcool polyvinylique.

5. Une feuille selon l'une quelconque des revendications 1 à 4, dans laquelle l'adhésif est un copolymère d'ester d'acide acrylique.

6. Un rouleau d'une feuille selon l'une quelconque des revendications 1 à 5.

7. Un procédé de fabrication d'un rouleau selon la revendication 1, dans lequel une couche bitumineuse de glissement est formée sur une couche résistant à la chaleur, ou une couche résistant à la chaleur est appliquée sur un côté d'une couche bitumineuse de glissement, une couche anti-adhésive absorbant l'eau ou l'autre côté, le côté libre de la couche bitumineuse de glissement, est revêtu d'une émulsion aqueuse d'un adhésif et la couche bitumineuse de glissement est enroulée sur un cylindre tandis que la couche anti-adhésive est collée de l'autre côté de la couche bitumineuse.

## Patentansprüche

1. Ein Verbundbahnmaterial, enthaltend eine bituminöse Gleitschicht zur Verringerung der auf die Außenfläche eines Pfahls oder einer anderen Unter-Boden-Struktur wirkenden Negativreibung, dadurch gekennzeichnet, daß eine Oberfläche der genannten Gleitschicht mit einer wärmebeständigen Schicht versehen ist und die andere Oberfläche mit einer Wasser absorbierenden Abziehschicht versehen ist, wobei zwischen der Gleitschicht und der Wasser absorbierenden Abziehschicht eine Klebeschicht vorgesehen ist, welche dadurch gebildet wird, daß man eine wässrige Emulsion eines Klebemittels auf die genannte andere Oberfläche der bituminösen Gleitschicht oder auf die Abziehschicht aufbringt.

2. Ein Bahnmaterial gemäß Anspruch 1, in dem die wärmebeständige Schicht ein wärmebeständiges Papier ist.

3. Ein Bahnmaterial gemäß Anspruch 1 oder 2, bei dem die Außenseite der wärmebeständigen Schicht mit einem Abziehmittel versehen ist.

4. Ein Bahnmaterial gemäß irgendeinem der Ansprüche 1 bis 3, bei dem die Wasser absorbierende Abziehschicht dadurch hergestellt wird, daß man Papier mit einer wässrigen Lösung aus Polyvinylalkohol überzieht.

5. Ein Bahnmaterial gemäß irgendeinem der Ansprüche 1 bis 4, bei dem das Klebemittel ein Acrylsäureester-Mischpolymer ist.

6. Eine Rolle eines Bahnmaterials gemäß irgendeinem der Ansprüche 1 bis 5.

7. Ein Verfahren zur Herstellung einer Rolle gemäß Anspruch 6, bei dem eine bituminöse Gleitschicht auf einer wärmebeständigen Schicht gebildet wird oder eine wärmebeständige Schicht auf eine Seite einer bituminösen Gleitschicht aufgebracht wird, eine Wasser absorbierende Abziehschicht oder die andere, freie Seite der bituminösen Gleitschicht mit einer wässrigen Emulsion eines Klebemittels überzogen wird und die bituminöse Gleitschicht auf einen Zylinder aufgewickelt wird, während die Abziehschicht auf die genannte andere Seite der bituminösen Schicht aufgeklebt wird.